# EUROPEAN PATENT SPECIFICATION

(11) **EP 2 073 575 B1**
(45) Date of publication and mention of the grant of the patent: **02.03.2016**
(21) Application number: 07123868.7
(22) Date of filing: 20.12.2007
(51) Int. Cl.: H04W 4/02, H04W 8/10

(54) **Method and apparatus for collecting location information in a mobile phone network being divided into local cells having cell IDs**
Verfahren zur Erfassung von Ortsinformationen in einem Mobiltelefonnetz, das in lokale Zellen mit Cell IDs aufgeteilt ist
Procédé et appareil pour collecter des informations de localisation dans un réseau de téléphonie mobile qui est divisé en cellules locales ayant des cell IDs

(43) Date of publication of application: 24.06.2009
(73) Proprietor: Alcatel Lucent, 92100 Boulogne-Billancourt (FR)
(72) Inventor: Bemmel, Jeroen, 2312 RD, Leiden (NL)
(74) Representative: Sciaux, Edmond

(56) References cited:
- EP-A- 1 641 301
- WO-A-97/24010
- US-A1- 2004 192 341
- 3GPP SA WG2: "Digital cellular telecommunications system (Phase 2+); Universal Mobile Telecommunications System (UMTS); Functional stage 2 description of Location Services (LCS) (3GPP TS 23.271 version 7.9.0 Release 7); ETSI TS 123 271" ETSI STANDARDS, LIS, SOPHIA ANTIPOLIS CEDEX, FRANCE, vol. 3-SA2, no. V7.9.0, 1 October 2007 (2007-10-01), pages 1-147, XP014039889 ISSN: 0000-0001

## Description

The invention is related to a method for collecting information regarding the location where services provided by a service provider via a service telephone number and a mobile phone network being divided into local cells having cell IDs are used by a user. The invention further relates to a mobile phone network being divided into local cells having cell IDs.

Nowadays more and more services are provided in electronic form via the internet or mobile phone services. The services may be requested by telephone, a computer with internet access or mobile handheld devices with internet access through a mobile phone network.

For a service provider it is important to know on which way and from which location a service is used. On one hand this allows the service provider to start marketing campaigns in the best place, i.e. where the services are actually requested, and on the other hand to improve the efficiency of the campaigns by verifying their effect.

It was easy to track orders received by mail or fixed telephones since the location of the user was obvious from his address or telephone number. Nowadays, more and more services are requested via mobile phones, e.g. by a phone call or a message using the Short Message Services called SMS. For a service provider it is important to know where the users are located to place e.g. advertisements in the best place.

Since services and goods provided electronically and paid indirectly through the telephone bill or credit cards to not give any information as to the customer's address or other pertinent information about the customer to the provider the customer remains anonymous and his profile unknown to the provider.

WO 97/24010 describes a value added personal location service for wireless communications system customers using existing information in the wireless communication infrastructure to identify the cell or registration area in which a mobile terminal is currently located. In one example of the invention, a query processor receives a dispatcher query. The query processor communicates with existing communications network components and databases to determine the location of the requested vehicle or person.
It is the aim of this invention to provide a method and a mobile phone network that enable collecting information about a customer requesting services via a mobile phone network.

This aim is achieved by a method according to claim 1 and a mobile phone network according to claim 8. Preferred embodiments are described in the dependent claims.

A method for collecting information regarding the location from where services are requested by a user from a service provider via a mobile phone network being divided into local cells having cell IDs is proposed, which is characterized in that once said request is transmitted through the mobile phone network, the cell ID of the cell in which the user is located is stored and made available to the service provider.

Mobile phone networks are divided into different cells. These cells provide the necessary infrastructure to allow the user to log into the mobile phone network via the facilities of the cell in which he is located. When the user moves from one place to the other and changes cells, his mobile device, e.g. his mobile phone, logs into the next cell.

Today, a lot of services may be requested by telephone, and some are provided via mobile phone networks. Traditionally, orders made by the phone could be distinguished as to their local origin by the fixed phone number of the person calling, or, in the case of physical goods ordered, by the addressee of the goods. This information is more and more lost since people are calling from their mobile phones, and hence no locally distinguishable number is available, and the goods ordered are sent electronically, e.g. content sent via the internet, games or ringing tones for mobile phones, but also electronic railway or plane tickets which are printed by the user.

Information as to where the user is located when requesting a service is interesting for the service provider in order to focus his service campaigns or to measure the efficiency of locally restricted campaigns. Such information may help e.g. to determine in which region a certain good is needed, but also at which occasion a user takes the time to order e.g. a ringing tone for his mobile phone.

The request can be transferred by any means using a mobile phone network, in particular a phone call using a mobile phone, a SMS using the Short Message Services provided by the mobile phone network, or any other kind of electronic message, in particular using a handheld device.

In one embodiment of the invention, the historical data of the cell IDs in which the user was logged in prior to making his request is collected and stored. Once the user accedes to a number of a service provider using the method according to the invention, this historical information is transmitted. This kind of information is particularly useful for interpreting data correctly. A movement pattern of the user may be established. The service provider can distinguish between users who are in a determined place, e.g. at home or in the office, and users who are travelling.

Such information may include information about the cell IDs only, but may also include further information like the time and the duration of the user's presence in a cell of the network. Any combination or compilation of such information is also possible.

Historical information may preferably be transmitted to the service provider in statistical form, e.g. aggregated over a period of time like one month. This addresses privacy concerns. The information transmitted to the service provider may e.g. say for how long a user was logged into a certain cell during a period of time but not the exact time. In this way, the service provider can gather the information of interest to him but does not gain any information of the location of the user at a given time. Privacy is ensured while the useful information is nevertheless transmitted.

In another embodiment of the invention the mobile phone network cells are linked with attributes like predefined geographical category information. Such information may e.g. be information that a particular cell is located in a city of a certain size, contains a main traffic junction or traffic arterial like motorways or railways, schools universities etc.

It may be interesting for the service provider to know at which occasion certain services are needed and used. In particular services that are related to mobile phones or handheld computers are often not used when the users are at home but rather when they are travelling. A railway trip may be an occasion for downloading new ringing tones on mobile phones or new games on handheld computers. The information useful to the service providers may hence rather be the circumstance of the service request than the mere geographical location of the cell. Hence, cells may be attributed to different information categories like "contains main railroad track". The service provider may start a marketing campaign in the trains and measure the efficiency by information about the use of the proposed services out of cells of the network carrying the attribute "main railroad track".

Today, mobile phones are widely used by young people. Reliable information about this group would be difficult to obtain if only information regarding fixed phones was be used. However, not only young people use mobile phones, so that a distinguishing attribute as to the age of the person requesting a service might be the presence of a public school or a university in a cell of the mobile phone network.

Other context information may additionally be collected, like e.g. information about the time of day. Such information may be used to determine whether certain services are requested for professional or rather for personal use.

The aim of the invention, is further achieved by a mobile phone network being divided into local cells having cell IDs which is characterized in that it has means for collecting the cell IDs of the cells out of which a connection is established, and means for transferring this information to the owner of the telephone line which has been called. Such a mobile phone network allows collecting information regarding the cells out of which a user is making a request for services and transferring such information to the owner of the number called, hence the provider of the services requested. The provider can gather the information he needs to address the issues raised with regard to the method described above and below.

The mobile phone network may further have means to store cell attributes in a database. These cell attributes may additionally or instead of other information be transferred to the owner of the telephone line.

One embodiment of the invention is described in more detail with regard to the attached drawing as an example. It is to be understood that this example shall not limit the scope of the invention which is defined by the claims.
- **Figure 1**: shows the cells of a mobile phone network covering a mid-size town;
- **Figure 2**: shows the cells of a mobile phone network along a train trajectory.

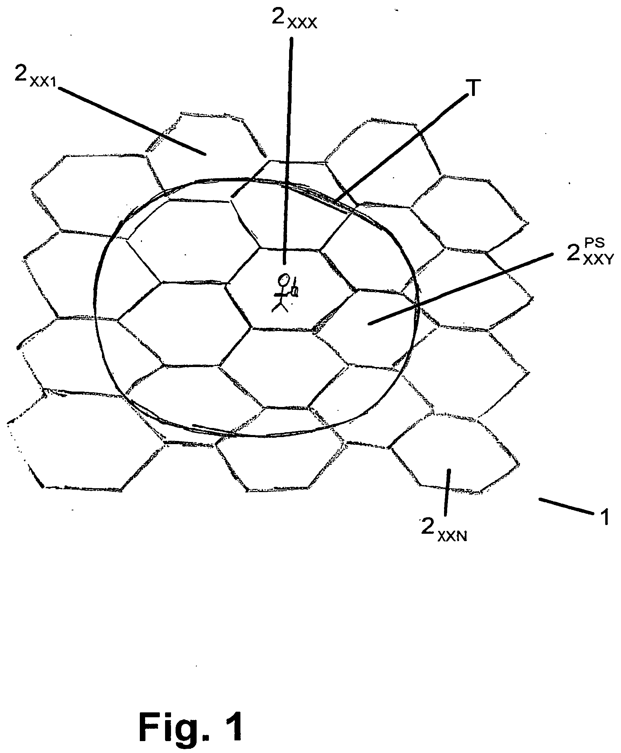

As can see from **Fig. 1****,** a mobile phone network **1** is divided in a multitude of cells **2** which have identifications (IDs) consisting of a number of digits, here **2_{XX1}** through **2_{XXN}.** The cells shown in this example cover the mid-size town **T.**

A service provider is providing ringing tones to be downloaded by and installed on mobile phones. In order to download a ringing tone, a text message (SMS) must be sent to a given phone number, usually a so-called service number, which is subject to charges. The service provider then sends the requested ringing tone as electronic file to the user.

The provider wishes to know where his services are used in order to perform a marketing campaign offering his services to new customers. Such information may include information regarding the place where people use particular services, but also information regarding the particular situation where people use the services.

When a user uses his mobile phone to send a SMS to the service number of the service provider the mobile phone logs into the closest cell of the mobile phone network, in the example given in Fig. 1 the cell with the cell ID **2_{XXX}**, and sends the message to the service provider's number. According to the invention, the cell ID **2_{XXX},** or at least a number of digits allowing identification of the cell in the relevant context, like e.g. the last three digits XXX, is collected and transmitted to the service provider.

In the example of Fig. 1, it is likely that services are more often requested out of cells that overlap with the territory of the town T than out of cells that only cover the countryside around the town.

The service provider wishes to perform a marketing campaign to promote his services. The information received from collecting the cell IDs allows focusing this campaign on a region of interest, e.g. on the cells where already a lot of customers are using the services and may be interested in new products, or, to the contrary, on the cells where less people use the services, and hence a potential exists to boost the sales.

The efficiency of a campaign can be measured by comparing data before and after a campaign. If a campaign is performed locally, the development of the sales in the cells of this area may be compared to the development of the sales in the cells where no campaign was performed.

The context attribute "mid-size town", or the context attribute "countryside" may be linked to the respective cell IDs. This allows to better identify the cells of interest for marketing activities. Misinterpretation e.g. of a cell in the countryside as cell of particular market potential may be avoided.

Other context data may be collected and used for making campaigns more efficient and for measuring their effect. E.g. information of the time of the day when services are used may be collected and used for the selection of the best time to broadcast radio or television spots.

Other attributes **PS** may be linked with the cell IDs, e.g. the presence of a public school in cell **2_{XXY}.** This allows the service provider to understand why e.g. certain services are particularly often requested out of these cells, and to arrange the marketing campaigns accordingly.

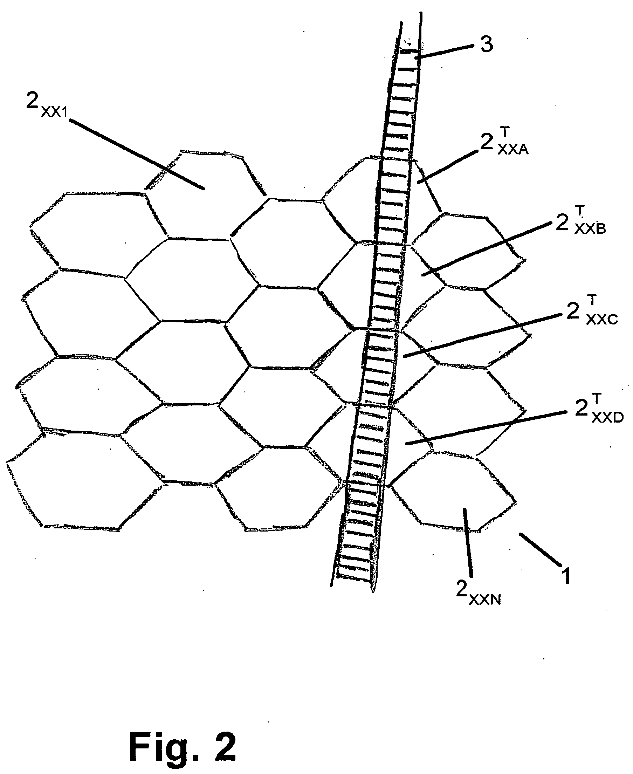

**Fig. 2** also shows a mobile phone network **1** which is divided in a multitude of cells **2_{XX1}.** through **2_{XXN}.** which have identifications (IDs) consisting of a number of digits. Further attributes may be linked to the cell IDs which are related to particular geographical or other features. In the example of Fig. 2 all cells which are crossed by the train trajectory **3** carry the attribute **"T".**

A service provider is providing games to be downloaded by and played on mobile phones. In order to download a game, a text message (SMS) must be sent to a given phone number, usually a so-called service number which is subject to charges. The service provider then sends the requested program to the user.

This is a service used in particular by travelling people who wish to have some entertainment when travelling. If the cell IDs only are collected, as described in the example of Fig. 1, this would possibly not lead to comprehensible information for the service provider.

The service provider would see a region with probably low population density where his services are particularly often requested. However, in this example, each mobile phone network which overlaps with the train trajectory 3 carries the attribute T. The service provider can hence understand that the frequent use of his services is probably related to the presence of the train trajectory. Marketing campaigns can consequently be performed on trains on this trajectory or on the railway stations along the trajectory.

Furthermore, information regarding the time of the day when the services are requested may be collected. This makes it even possible to choose particular trains to perform marketing campaigns.

In addition, historical data is collected about the cell IDs the user was logged in prior to making his request. If e.g. a user sits in a train following the train trajectory **3** from the top to the bottom of figure 2, he is first logged into cell **2_{XXA},** then into cell **2_{XXB},** then into cell **2_{XXC},** and so on. This information is collected and stored. When the train crosses cell **2_{XXD},** the user is sending a SMS to download a game. In addition to his request, the stored historical information is made accessible to the service provider, i.e. that the last cells the user was logged into were the cells **2_{XXA}, 2_{XXB}, 2_{XXC},** and **2_{XXD}.** The service provider can easily distinguish such a user from a user being immobile when making his request, e.g. at home or in the office.

## Claims

1. Method for collecting information regarding the location from where a service is requested by a user from a service provider via a mobile phone network (1) being divided into local cells (2) having cell IDs (2_{XX1} - 2_{XXN}), wherein
- once said request is transmitted through the mobile phone network (1), the cell ID (2_{XXX}) of the cell in which the user is located is stored and made available to the service provider;
- historical data of the cell IDs (2_{XX1} - 2_{XXN}) in which the user was logged in prior to making the request is collected, stored and transmitted to the service provider when the service is requested;
- cell IDs (2_{XX1} - 2_{XXN}) are linked with predefined attributes, indicating predefined geographical category information, which are made available to the service provider; and
- context information is collected, providing information about the time of day when the service is used.

2. Method according to claim 1, **characterized in that** the request is transmitted by a telephone call.

3. Method according to claim 1, **characterized in that** the request is transmitted by a SMS.

4. Method according to claim 1, **characterized in that** the request is transmitted by an electronic message using a handheld device.

5. Method according to any of claims 1 to 4**, characterized in that** the last three cell ID (2_{XX1}-2_{XXN}) are stored

6. Method according to claims **5 or 6, characterized in that** historical data are transmitted in statistical form.

7. Mobile phone network (1) being divided into local cells (2) having cell IDs (2_{XX1} - 2_{XXN}), wherein the mobile phone network (1)
- has means for collecting the cell IDs (2_{XX1} - 2_{XXN}) of the cells (2) out of which a connection to a service is established;
- means for transferring this information to the provider of the service;
- means for collecting historical data of the cell IDs (2_{XX1} - 2_{XXN}) in which the user was logged in prior to connecting to the service;
- means for storing and transmitting the collected historical data to the service provider when the service is requested;
- means for linking cell IDs (2_{XX1} - 2_{XXN}) with predefined attributes, indicating predefined geographical category information;
- means for making the attributes available to the service provider; and
- means for collecting context information, providing information about the time of day when the service is used.

## Patentansprüche

1. Verfahren für das Sammeln von Informationen hinsichtlich des Standorts, von dem aus von einem Benutzer eines Dienstleisters über ein in lokale Zellen (2) aufgeteiltes mobiles Telefonnetzwerk (1) ein Dienst angefordert wird, wobei die lokalen Zellen (2) über Zellen-IDs (2_{XX1} - 2_{XXN}) verfügen, wobei
- sobald besagte Anfrage über das mobile Telefonnetzwerk (1) übermittelt wird, die Zellen-ID (2_{XXX}) der Zelle, in welcher der Benutzer lokalisiert ist, gespeichert und dem Dienstleister zur Verfügung gestellt wird;
- historische Daten der Zellen-IDs (2_{XX1} - 2_{XXN}), in welchen der Benutzer vor dem Tätigen der Anfrage eingeloggt war, gesammelt, gespeichert und an den Dienstleister übermittelt werden, wenn der Dienst angefordert wird;
- Zellen-IDs (2_{XX1} - 2_{XXN}) mit vordefinierten Attributen verlinkt werden, die vordefinierte Informationen geografischer Kategorien anzeigen, die dem Dienstleister zur Verfügung gestellt werden; und
- Kontextinformationen gesammelt werden, die Information über die Tageszeit zur Verfügung stellen, zu welcher der Dienst genutzt wird.

2. Verfahren nach Anspruch 1, **dadurch gekennzeichnet, dass** die Anfrage anhand eines Telefonats übermittelt wird.

3. Verfahren nach Anspruch 1, **dadurch gekennzeichnet, dass** die Anfrage anhand einer SMS übermittelt wird.

4. Verfahren nach Anspruch 1, **dadurch gekennzeichnet, dass** die Anfrage anhand einer elektronischen Nachricht unter Verwendung eines mobilen Geräts übermittelt wird.

5. Verfahren nach einem jeglichen der Ansprüche 1 bis 4, **dadurch gekennzeichnet, dass** die ersten drei Zellen-IDs (2_{XXI} - 2_{XXN}) gespeichert werden.

6. Verfahren nach Anspruch 5 oder 6, **dadurch gekennzeichnet, dass** die historischen Daten in statistischer Form übermittelt werden.

7. Mobiles Telefonnetzwerk (1), in lokale Zellen (2) unterteilt, die mit Zellen-IDs (2_{XXI} - 2_{XXN}) versehen sind, wobei das mobile Telefonnetzwerk (1)
- über Mittel zum Sammeln der Zellen-lDs (2_{XXI} - 2_{XXN}) der Zellen (2) verfügt, aus welchen heraus eine Verbindung zu einem Dienst hergestellt wird;
- über Mittel für das Übertragen dieser Information zu dem den Dienst leistenden Provider verfügt;
- über Mittel für das Sammeln historischer Daten der Zellen-IDs (2_{XXI} - 2_{XXN}) verfügt, in welchen der Benutzer eingeloggt war, ehe er die Verbindung zum Dienst herstellte;
- über Mittel für das Speichern und Übermitteln der gesammelten historischen Daten an den Dienstleister verfügt, wenn der Dienst angefordert wird.
- über Mittel für das Verzinken der Zellen-IDs (2_{XXI} - 2_{XXN}) mit vordefinierten Attributen verfügt, wobei vordefinierte Informationen zu geografischen Kategorien angegeben werden;
- über Mittel verfügt, um die Attribute dem Dienstleister zugänglich zu machen; und
- über Mittel verfügt, um Kontextinformationen zu sammeln, die Information zur Tageszeit zur Verfügung stellen, zu welcher der Dienst genutzt wird.

## Revendications

1. Procédé de collecte d'informations relatives à la position depuis laquelle un service est demandé par un utilisateur à un fournisseur de services par le biais d'un réseau téléphonique mobile (1) divisé en cellules locales (2) ayant des ID de cellules (2_{XX1} - 2_{XXN}), dans lequel
- après que ladite demande est transmise par l'intermédiaire du réseau téléphonique mobile (1), l'ID de cellule (2_{XXX}) dans laquelle se trouve l'utilisateur est stocké et mis à disposition du fournisseur de services ;
- les données historiques des ID de cellules (2_{XX1} - 2_{XXN}) dans lesquelles l'utilisateur s'est connecté avant de faire la demande sont collectées, stockées et transmises au fournisseur de services lorsque le service est demande ;
- les ID de cellules (2_{XX1} - 2_{XXN}) sont liés à des attributs prédéfinis, indiquant des informations de catégories géographiques prédéfinies, qui sont mises à disposition du fournisseur de services ; et
- des informations de contexte sont collectées, donnant des informations sur l'heure à laquelle le service est utilisé.

2. Procédé selon la revendication 1, **caractérisé en ce que** la demande est transmise par un appel téléphonique.

3. Procédé selon la revendication 1, **caractérisé en ce que** la demande est transmise par un SMS.

4. Procédé selon la revendication 1, **caractérisé en ce que** la demande est transmise par un message électronique à l'aide d'un dispositif portable.

5. Procédé selon l'une quelconque des revendications 1 à 4, **caractérisé en ce que** les trois derniers ID de cellules (2_{XX1} - 2_{XXN}) sont stockés.

6. Procédé selon les revendications 5 ou 6, **caractérisé en ce que** les données historiques sont transmises sous forme de statistiques.

7. Réseau téléphonique mobile (1) divisé en cellules locales (2) ayant des ID de cellules (2_{XX1} - 2_{XXN}), dans lequel le réseau téléphonique mobile (1) comprend
- moyens de collecte des ID de cellules (2_{XX1} - 2_{XXN}) des cellules (2) à partir desquelles une connexion à un service est établie ;
- moyens de transfert de ces informations au fournisseur de service
- moyens de collecte des données historiques des ID de cellules (2_{XX1} - 2_{XXN}) dans lesquelles l'utilisateur s'est connecté avant de se connecter au service ;
- moyens de stockage et de transmission des données historiques collectées au fournisseur de services lorsque le service est demandé ;
- moyens de liaison des ID de cellules (2_{XX1} - 2_{XXN}) à des attributs prédéfinis, indiquant des informations de catégories géographiques prédéfinies ;
- moyens de mise à disposition des attributs au fournisseur de services ; et
- moyens de collecte d'informations de contexte, donnant des informations sur l'heure à laquelle le service est utilisé.
